# EUROPÄISCHE PATENTSCHRIFT

(11) **EP 4 255 739 B1**
(45) Veröffentlichungstag und Bekanntmachung des Hinweises auf die Patenterteilung: **17.06.2026**
(21) Anmeldenummer: 21811345.4
(22) Anmeldetag: 16.11.2021
(51) Int. Cl.: G05D 1/00

(54) **ROLLENEINHEIT FÜR EIN FAHRZEUG UND FAHRZEUG**
ROLLER UNIT FOR A VEHICLE, AND VEHICLE
UNITÉ DE ROULEAU POUR UN VÉHICULE ET VÉHICULE

(30) Priorität: 03.12.2020 DE 102020007378
(43) Veröffentlichungstag der Anmeldung: 11.10.2023
(73) Patentinhaber: SEW-EURODRIVE GmbH & Co. KG, 76646 Bruchsal (DE)
(72) Erfinder: EPP, Mario, 69245 Bammental (DE); KUHLMAY, Lukas, 68782 Brühl (DE)
(86) Internationale Anmeldenummer: PCT/EP2021/081881
(87) Internationale Veröffentlichungsnummer: WO 2022/117334

(56) Entgegenhaltungen:
- DE-T2- 69 621 738
- US-A- 4 573 548
- US-A- 5 367 458

## Beschreibung

Die Erfindung betrifft eine Rolleneinheit für ein Fahrzeug, insbesondere für ein autonom fahrendes Fahrzeug, umfassend einen Haltekörper, mindestens ein um eine Drehachse relativ zu dem Haltekörper drehbares Rad und einen Montagekörper, wobei der Haltekörper relativ zu dem Montagekörper um eine Schwenkachse drehbar ist.

In technischen Anlagen, beispielsweise in Produktionswerken, werden mobile Transportsysteme, insbesondere autonom fahrende Fahrzeuge, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden.

Aus dem Dokument DE 10 2012 025 152 A1 ist ein autonom fahrendes Fahrzeug bekannt, welches als fahrerloses Transportsystem ausgebildet ist und mehrere Rolleneinheiten sowie eine Antriebseinheit aufweist. Die Rolleneinheiten und die Antriebseinheit sind an einem Fahrzeugrahmen des Fahrzeugs angeordnet.

Aus der DE 20 2014 003 033 U1 ist eine gattungsgemäße Rolleneinheit bekannt. Eine solche Rolleneinheit ermöglicht einem Fahrzeug einfache Richtungswechsel und dadurch eine hohe Beweglichkeit.

Aus dem Dokument DE 696 21 738 T2 ist eine Vorrichtung zur Bewegungsverfolgung für ein fahrerloses Fahrzeug bekannt. Die Vorrichtung umfasst ein Rad, welches um eine Drehachse drehbar und um eine Schwenkachse schwenkbar ist. Dabei sind auch ein Sensor zur Erfassung einer Drehung des Rades sowie ein Schwenksensor zur Erfassung einer Schwenkbewegung vorgesehen.

Aus der US 5 367 458 A ist ein Fahrzeug mit einem Rad bekannt, welches einen Sensor zur Erfassung einer Drehung des Rades sowie ein Sensor zur Erfassung einer Schwenkbewegung des Rades aufweist.

Aus dem Dokument US 4 740 778 A ist eine Vorrichtung zur Erkennung eines defekten Resolvers für ein fahrerloses Fahrzeug bekannt. Es sind ein erster Sensor zur Erfassung einer Drehung des Rades sowie ein zweiter Sensor zur Erfassung einer Schwenkbewegung des Rades vorgesehen.

Aus der DE 10 2017 222 779 A1 sind ein Getriebe und ein Verfahren zur Erfassung von Fehlern in einem solchen Getriebe bekannt.

Aus der US 4,573,548 A ist eine mobile Basis für Roboter bekannt. Die Basis weist mehrere Räder auf, die simultan angetrieben und gelenkt werden.

Der Erfindung liegt die Aufgabe zugrunde, eine Rolleneinheit für ein Fahrzeug sowie ein Fahrzeug, insbesondere ein autonom fahrendes Fahrzeug, weiterzubilden.

Die Aufgabe wird durch eine Rolleneinheit mit den im Anspruch 1 angegebenen Merkmalen gelöst. Vorteilhafte Ausgestaltungen und Weiterbildungen sind Gegenstand der Unteransprüche. Die Aufgabe wird auch durch ein Fahrzeug mit den im Anspruch 9 angegebenen Merkmalen gelöst. Vorteilhafte Ausgestaltungen und Weiterbildungen sind Gegenstand der Unteransprüche.

Eine erfindungsgemäße Rolleneinheit für ein Fahrzeug, insbesondere für ein autonom fahrendes Fahrzeug, umfasst einen Haltekörper, mindestens ein um eine Drehachse relativ zu dem Haltekörper drehbares Rad und einen Montagekörper. Dabei ist der Haltekörper relativ zu dem Montagekörper um eine Schwenkachse schwenkbar. Die Rolleneinheit weist einen ersten Drehgeber zur Erfassung einer Drehzahl und/oder eines Drehwinkels des Rades relativ zu dem Haltekörper und einen zweiten Drehgeber zur Erfassung eines Schwenkwinkels des Haltekörpers relativ zu dem Montagekörper auf.

Die Erfassung einer Drehzahl und/oder eines Drehwinkels des Rades und eines Schwenkwinkels des Haltekörpers ermöglicht eine Bestimmung eines Fahrweges der Rolleneinheit und damit einer Position der Rolleneinheit relativ zu einer vorherigen Position der Rolleneinheit. Somit ist auch die aktuelle Position eines Fahrzeugs bestimmbar, an welchem die Rolleneinheit angeordnet ist. Die Rolleneinheit ist dabei verhältnismäßig kostengünstig herstellbar. Die Rolleneinheit liefert eine präzise Positionsbestimmung unabhängig von äußeren Voraussetzungen, insbesondere unabhängig von der Verfügbarkeit von GPS-Signalen.

Erfindungsgemäß ist der erste Drehgeber in einer ersten Sensoreinheit angebracht. Dabei weist die Rolleneinheit ein erstes Getriebe auf, welches eine Drehung des Rades zu der ersten Sensoreinheit, insbesondere zu dem ersten Drehgeber, überträgt. Der erste Drehgeber erfasst eine Drehzahl und/oder einen Drehwinkel des Rades mittelbar über das erste Getriebe. Durch die Anordnung des ersten Drehgebers in der ersten Sensoreinheit ist die Übertragung einer erfassten Drehzahl und/oder eines erfassten Drehwinkels des Rades zu einer Auswerteeinheit vereinfacht.

Vorzugsweise ist die erste Sensoreinheit dabei an dem Montagekörper angebracht. Dadurch ist die Übertragung einer erfassten Drehzahl und/oder eines erfassten Drehwinkels des Rades zu einer Auswerteeinheit besonders vereinfacht.

Gemäß einer vorteilhaften Ausgestaltung der Erfindung ist der zweite Drehgeber an dem Montagekörper angebracht. Dabei erfasst der zweite Drehgeber einen Schwenkwinkel des Haltekörpers unmittelbar. Vorteilhaft sind dabei keine zusätzlichen Komponenten zum Übertragung eines Schwenkwinkels des Haltekörpers erforderlich.

Gemäß einer anderen vorteilhaften Ausgestaltung der Erfindung ist der zweite Drehgeber in einer zweiten Sensoreinheit angebracht. Dabei weist die Rolleneinheit ein zweites Getriebe auf, welches eine Schwenkung des Haltekörpers zu der zweiten Sensoreinheit, insbesondere zu dem zweiten Drehgeber, überträgt. Der zweite Drehgeber erfasst einen Schwenkwinkel des Haltekörpers mittelbar über das zweite Getriebe. Durch die Anordnung des zweiten Drehgebers in der zweiten Sensoreinheit ist die Übertragung eines erfassten Schwenkwinkels des Haltekörpers zu einer Auswerteeinheit vereinfacht.

Vorzugsweise ist die zweite Sensoreinheit dabei an dem Montagekörper angebracht. Dadurch ist die Übertragung eines erfassten Schwenkwinkels des Haltekörpers zu einer Auswerteeinheit besonders vereinfacht.

Gemäß einer vorteilhaften Weiterbildung der Erfindung weist die Rolleneinheit eine Federeinheit auf, welche den Haltekörper entlang der Schwenkachse von dem Montagekörper weg drückt. Wenn die Rolleneinheit an einem Fahrzeug angeordnet ist, so wird das Rad der Rolleneinheit durch eine von der Federeinheit ausgeübten Federkraft auf den Boden gedrückt. Eine Lauffläche des Rades steht somit stets in Kontakt mit dem Boden, auf welchem sich das Fahrzeug befindet. Somit ist die Präzision der Positionsbestimmung weiter erhöht.

Ein erfindungsgemäßes Fahrzeug, insbesondere ein autonom fahrendes Fahrzeug, umfasst einen Fahrzeugrahmen und mindestens eine Rolleneinheit nach einem der vorangegangenen Ansprüche.

Dadurch ist die aktuelle Position des Fahrzeugs verhältnismäßig einfach und präzise bestimmbar. Die Rolleneinheit liefert dabei eine präzise Positionsbestimmung des Fahrzeugs unabhängig von äußeren Voraussetzungen, insbesondere unabhängig von der Verfügbarkeit von GPS-Signalen.

Gemäß einer vorteilhaften Ausgestaltung der Erfindung ist die mindestens eine Rolleneinheit derart an dem Fahrzeugrahmen angeordnet, dass die Schwenkachse in eine Vertikalrichtung verläuft, und dass die Drehachse rechtwinklig zu der Vertikalrichtung verläuft. Damit ist die Präzision der Positionsbestimmung weiter erhöht.

Gemäß einer bevorzugten Ausgestaltung der Erfindung weist das Fahrzeug eine Auswerteeinheit auf, welche eine von dem ersten Drehgeber erfasste Drehzahl des Rades und/oder einen von dem ersten Drehgeber erfassten Drehwinkel des Rades, sowie einen von dem zweiten Drehgeber erfassten Schwenkwinkel des Haltekörpers auswertet.

Vorzugsweise ist die Auswerteeinheit dazu eingerichtet, aus einer von dem ersten Drehgeber erfassten Drehzahl des Rades und/oder einem von dem ersten Drehgeber erfassten Drehwinkel des Rades, sowie einem von dem zweiten Drehgeber erfassten Schwenkwinkel des Haltekörpers eine aktuelle Position des Fahrzeugs, insbesondere relativ zu einer vorherigen Position des Fahrzeugs zu bestimmen.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Seitenansicht eines autonom fahrenden Fahrzeugs,
- Figur 2:: eine teiltransparente Seitenansicht einer Rolleneinheit.

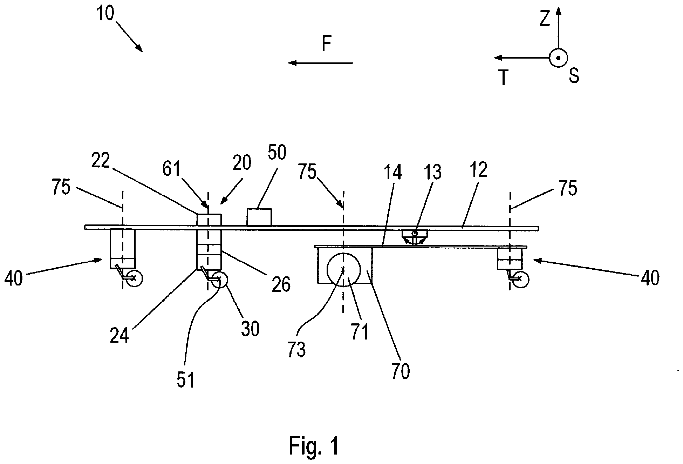

Figur 1 zeigt eine schematische Seitenansicht eines Fahrzeugs 10. Das Fahrzeug 10 dient vorliegend zum Transport von Gegenständen in einer technischen Anlage. Bei der technischen Anlage handelt es sich um eine industrielle Anwendung, beispielsweise ein Produktionswerk. Das Fahrzeug 10 dient beispielsweise auch zur Lieferung von Waren zu einem Wohnhaus eines privaten Empfängers in einer Stadt oder in einem Wohngebiet. Bei dem Fahrzeug 10 handelt es sich vorliegend um ein autonom fahrendes Fahrzeug. In der hier gezeigten Darstellung befindet sich das Fahrzeug 10 auf einem ebenen Boden.

Das Fahrzeug 10 umfasst einen Fahrzeugrahmen 12 und einen Pendelrahmen 14. Der Pendelrahmen 14 ist um eine Pendelachse 13 relativ zu dem Fahrzeugrahmen 12 schwenkbar. Die Pendelachse 13 verläuft in Seitenrichtung S. Der Fahrzeugrahmen 12 weist einen annähernd rechteckförmigen Querschnitt auf und erstreckt sich vorwiegend in eine Grundrichtung T und in die Seitenrichtung S.

Die Grundrichtung T entspricht zumindest annähernd der gewöhnlichen Fahrtrichtung F des Fahrzeugs 10. Die Seitenrichtung S verläuft rechtwinklig zu der Grundrichtung T. Die Grundrichtung T und die Seitenrichtung S stellen horizontale Richtungen dar und verlaufen parallel zu dem ebenen Boden, auf welchem sich das Fahrzeug 10 befindet. Eine Vertikalrichtung Z steht senkrecht auf dem ebenen Boden und verläuft somit rechtwinklig zu der Grundrichtung T und rechtwinklig zu der Seitenrichtung S. Jede Richtung rechtwinklig zu der Vertikalrichtung Z stellt eine horizontale Richtung dar.

Das Fahrzeug 10 umfasst vorliegend vier Lenkrollen 40. An dem Fahrzeugrahmen 12 sind zwei Lenkrollen 40 in Seitenrichtung S versetzt zueinander angeordnet, wobei in der hier gezeigten Darstellung eine der besagten Lenkrollen 40 verdeckt ist. An dem Pendelrahmen 14 sind zwei weitere Lenkrollen 40 in Seitenrichtung S versetzt zueinander angeordnet, wobei in der hier gezeigten Darstellung eine der besagten Lenkrollen 40 verdeckt ist.

Die Lenkrollen 40 umfassen jeweils ein Montageelement, ein Halteelement und mindestens eine Laufrolle. Die Montageelemente der Lenkrollen 40 sind an dem Fahrzeugrahmen 12 sowie an dem Pendelrahmen 14 befestigt. Die Halteelemente und die Laufrollen sind dabei jeweils um eine Lenkachse 75 relativ zu den Montageelementen schwenkbar. Die Lenkachsen 75 verlaufen, zumindest annähernd, in Vertikalrichtung Z. Die Halteelemente der Lenkrollen 40 sind somit jeweils um eine in Vertikalrichtung Z verlaufende Lenkachse 75 relativ zu dem Fahrzeugrahmen 12 sowie relativ zu dem Pendelrahmen 14 schwenkbar.

Die Laufrollen der Lenkrollen 40 sind jeweils um eine in eine horizontale Richtung verlaufende Rollenachse relativ zu dem Halteelement drehbar. In der hier gezeigten Darstellung verlaufen die Rollenachsen in Seitenrichtung S. In Abhängigkeit von einer Schwenkung der Halteelemente um die Lenkachsen 75 verlaufen die Rollenachsen beispielsweise in Grundrichtung T oder in eine andere horizontale Richtung. Die Lenkachse 75 und die Rollenachse einer Lenkrolle 40 schneiden sich vorliegend nicht.

Es ist denkbar, dass die Lenkrollen 40 jeweils zwei Laufrollen aufweisen. Die beiden Laufrollen einer Lenkrolle 40 sind in diesem Fall um die gleiche Rollenachse drehbar und sind in Richtung der Rollenachse versetzt zueinander angeordnet. Die Lenkrollen 40 umfassen auch jeweils eine hier nicht dargestellte Bremseinheit zum Bremsen der Laufrollen.

Das Fahrzeug 10 umfasst ferner eine Antriebseinheit 70, die an dem Pendelrahmen 14 angeordnet ist. Die Antriebseinheit 70 umfasst zwei Antriebsräder 71, welche um eine Antriebsachse 73 drehbar gelagert sind. In der hier gezeigten Darstellung ist eines der Antriebsräder 71 verdeckt. Die Antriebseinheit 70 ist um eine Lenkachse 75 relativ zu dem Pendelrahmen 14 schwenkbar. In der hier gezeigten Darstellung verläuft die Antriebsachse 73 in Seitenrichtung S. In Abhängigkeit von einer Schwenkung der Antriebseinheit 70 um die Lenkachse 75 verläuft die Antriebsachse 73 beispielsweise in Grundrichtung T oder in eine andere horizontale Richtung.

Das Fahrzeug 10 umfasst ferner eine Rolleneinheit 20, die an dem Fahrzeugrahmen 12 angeordnet ist. Die Rolleneinheit 20 umfasst einen Montagekörper 22, einen Haltekörper 24, eine Federeinheit 26 und mindestens ein Rad 30. Der Montagekörper 22 der Rolleneinheit 20 ist an dem Fahrzeugrahmen 12 befestigt. Der Haltekörper 24 und das Rad 30 sind dabei um eine Schwenkachse 61 relativ zu dem Montagekörper 22 schwenkbar. Die Schwenkachse 61 verläuft, zumindest annähernd, in Vertikalrichtung Z. Der Haltekörper 24 und das Rad 30 der Rolleneinheit 20 ist somit um eine in Vertikalrichtung Z verlaufende Schwenkachse 61 relativ zu dem Fahrzeugrahmen 12 schwenkbar.

Das Rad 30 der Rolleneinheit 20 ist um eine in eine horizontale Richtung verlaufende Drehachse 51 relativ zu dem Haltekörper 24 drehbar. Das Rad 30 ist annähernd hohlzylindrisch ausgebildet und weist eine radial nach außen gerichtete Lauffläche auf. In der hier gezeigten Darstellung verläuft die Drehachse 51 in Seitenrichtung S. In Abhängigkeit von einer Schwenkung des Haltekörpers 24 um die Schwenkachse 61 verläuft die Drehachse 51 beispielsweise in Grundrichtung T oder in eine andere horizontale Richtung. Die Schwenkachse 61 und die Drehachse 51 der Rolleneinheit 20 schneiden sich vorliegend nicht.

Die Federeinheit 26 drückt den Haltekörper 24 entlang der Schwenkachse 61 von dem Montagekörper 22 weg. Die Federeinheit 26 drückt somit den Haltekörper 24 und das Rad 30 entlang der Schwenkachse 61 in Vertikalrichtung Z von dem Fahrzeugrahmen 12 weg und auf den Boden zu. Das Rad 30 wird somit durch eine von der Federeinheit 26 ausgeübten Federkraft auf den Boden gedrückt. Die Lauffläche des Rades 30 steht somit stets in Kontakt mit dem Boden, auf welchem sich das Fahrzeug 10 befindet.

Die Rolleneinheit 20 weist einen hier nicht dargestellten ersten Drehgeber zur Erfassung einer Drehzahl und eines Drehwinkels des Rades 30 relativ zu dem Haltekörper 24 auf. Die Rolleneinheit 20 weist auch einen hier nicht dargestellten zweiten Drehgeber zur Erfassung eines Schwenkwinkels des Haltekörpers 24 relativ zu dem Montagekörper 22 auf.

Das Fahrzeug 10 weist eine Auswerteeinheit 50 auf, welche über eine hier nicht dargestellte Datenleitung mit dem ersten Drehgeber und mit dem zweiten Drehgeber verbunden ist. Die Auswerteeinheit 50 wertet eine von dem ersten Drehgeber erfasste Drehzahl des Rades 30 und einen von dem ersten Drehgeber erfassten Drehwinkel des Rades 30, sowie einen von dem zweiten Drehgeber erfassten Schwenkwinkel des Haltekörpers 24 aus. Dabei bestimmt die Auswerteeinheit 50 aus einer von dem ersten Drehgeber erfassten Drehzahl des Rades 30 und einem von dem ersten Drehgeber erfassten Drehwinkel des Rades 30, sowie einem von dem zweiten Drehgeber erfassten Schwenkwinkel des Haltekörpers 24 eine aktuelle Position des Fahrzeugs 10, insbesondere relativ zu einer vorherigen Position des Fahrzeugs 10.

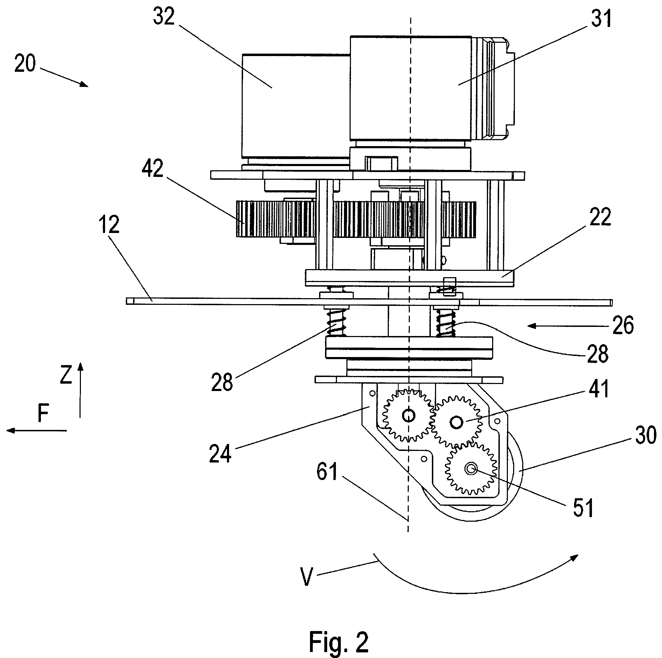

Figur 2 zeigt eine teiltransparente Seitenansicht der Rolleneinheit 20. Die Rolleneinheit 20 ist, wie bereits erwähnt, an dem Fahrzeugrahmen 12 des Fahrzeugs 10 angeordnet, wobei der Montagekörper 22 an dem Fahrzeugrahmen 12 befestigt ist. Das Fahrzeug 10 bewegt sich in die Fahrtrichtung F. Dabei dreht sich das Rad 30 der Rolleneinheit 20 um die Drehachse 51 in eine Vorzugsrichtung V.

Die Federeinheit 26 umfasst vorliegend eine Mehrzahl von Druckfedern 28, welche um die Schwenkachse 61 herum angeordnet sind. Die Druckfedern 28 drücken den Haltekörper 24 und das Rad 30 entlang der Schwenkachse 61 in Vertikalrichtung Z von dem Montagekörper 22 und von dem Fahrzeugrahmen 12 weg. Die Druckfedern 28 sind vorliegend als Spiralfedern ausgebildet.

Die Rolleneinheit 20 weist eine erste Sensoreinheit 31 auf. Die erste Sensoreinheit 31 ist an dem Montagekörper 22 angebracht. Der erste Drehgeber ist in der ersten Sensoreinheit 31 angebracht. Die Rolleneinheit 20 weist ein erstes Getriebe 41 auf. Das erste Getriebe 41, welches in dieser Darstellung teilweise verdeckt ist, überträgt eine Drehung des Rades 30 um die Drehachse 51 zu der ersten Sensoreinheit 31, insbesondere zu dem ersten Drehgeber.

Die Rolleneinheit 20 weist eine zweite Sensoreinheit 32 auf. Die zweite Sensoreinheit 32 ist ebenfalls an dem Montagekörper 22 angebracht. Der zweite Drehgeber ist in der zweiten Sensoreinheit 32 angebracht. Die Rolleneinheit 20 weist ein zweites Getriebe 42 auf. Das zweite Getriebe 42 überträgt eine Schwenkung des Haltekörpers 24 um die Schwenkachse 61 zu der zweiten Sensoreinheit 32, insbesondere zu dem zweiten Drehgeber.

Der erste Drehgeber erfasst eine Drehzahl und einen Drehwinkel des Rades 30 mittelbar über das erste Getriebe 41. Der zweite Drehgeber erfasst einen Schwenkwinkel des Haltekörpers 24 mittelbar über das zweite Getriebe 42. Der erste Drehgeber und der zweite Drehgeber sind, wie bereits erwähnt, über eine Datenleitung mit der Auswerteeinheit 50 des Fahrzeugs 10 verbunden. Der erste Drehgeber überträgt die erfasste Drehzahl und den erfassten Drehwinkel des Rades 30 über die Datenleitung zu der Auswerteeinheit 50. Der zweite Drehgeber überträgt den erfassten Schwenkwinkel des Haltekörpers 24 über die Datenleitung zu der Auswerteeinheit 50.

### Bezugszeichenliste

- 10: Fahrzeug
- 12: Fahrzeugrahmen
- 13: Pendelachse
- 14: Pendelrahmen
- 20: Rolleneinheit
- 22: Montagekörper
- 24: Haltekörper
- 26: Federeinheit
- 28: Druckfeder
- 30: Rad
- 31: erste Sensoreinheit
- 32: zweite Sensoreinheit
- 40: Lenkrolle
- 41: erstes Getriebe
- 42: zweites Getriebe
- 50: Auswerteeinheit
- 51: Drehachse
- 61: Schwenkachse
- 70: Antriebseinheit
- 71: Antriebsrad
- 73: Antriebsachse
- 75: Lenkachse
- F: Fahrtrichtung
- S: Seitenrichtung
- T: Grundrichtung
- V: Vorzugsrichtung
- Z: Vertikalrichtung

## Patentansprüche

1. Rolleneinheit (20) für ein Fahrzeug (10), insbesondere für ein autonom fahrendes Fahrzeug (10), umfassend
einen Haltekörper (24),
mindestens ein um eine Drehachse (51) relativ zu dem Haltekörper (24) drehbares Rad (30) und
einen Montagekörper (22), wobei der Haltekörper (24) relativ zu dem Montagekörper (22) um eine Schwenkachse (61) schwenkbar ist,
wobei die Rolleneinheit (20) einen ersten Drehgeber zur Erfassung einer Drehzahl und/oder eines Drehwinkels des Rades (30) relativ zu dem Haltekörper (24) und
einen zweiten Drehgeber zur Erfassung eines Schwenkwinkels des Haltekörpers (24) relativ zu dem Montagekörper (22)
aufweist, **dadurch gekennzeichnet dass**
der erste Drehgeber in einer ersten Sensoreinheit (31) angebracht ist, und dass
die Rolleneinheit (20) ein erstes Getriebe (41) aufweist, welches eine Drehung des Rades (30) zu der ersten Sensoreinheit (31) überträgt, und dass
der erste Drehgeber eine Drehzahl und/oder einen Drehwinkel des Rades (30) mittelbar über das erste Getriebe (41) erfasst.

2. Rolleneinheit (20) nach Anspruch 1,
**dadurch gekennzeichnet, dass**
die erste Sensoreinheit (31) an dem Montagekörper (22) angebracht ist.

3. Rolleneinheit (20) nach einem der vorangegangenen Ansprüche,
**dadurch gekennzeichnet, dass**
der zweite Drehgeber an dem Montagekörper (22) angebracht ist, und dass der zweite Drehgeber einen Schwenkwinkel des Haltekörpers (24) unmittelbar erfasst.

4. Rolleneinheit (20) nach einem der Ansprüche 1 bis 2,
**dadurch gekennzeichnet, dass**
der zweite Drehgeber in einer zweiten Sensoreinheit (32) angebracht ist, und dass die Rolleneinheit (20) ein zweites Getriebe (42) aufweist, welches eine Schwenkung des Haltekörpers (24) zu der zweiten Sensoreinheit (32) überträgt, und dass der zweite Drehgeber einen Schwenkwinkel des Haltekörpers (24) mittelbar über das zweite Getriebe (42) erfasst.

5. Rolleneinheit (20) nach Anspruch 4,
**dadurch gekennzeichnet, dass**
die zweite Sensoreinheit (32) an dem Montagekörper (22) angebracht ist.

6. Rolleneinheit (20) nach einem der vorangegangenen Ansprüche,
**dadurch gekennzeichnet, dass**
die Rolleneinheit (20) eine Federeinheit (26) aufweist, welche
den Haltekörper (24) entlang der Schwenkachse (61) von dem Montagekörper (22) weg drückt.

7. Fahrzeug (10), insbesondere autonom fahrendes Fahrzeug, umfassend
einen Fahrzeugrahmen (12) und
mindestens eine Rolleneinheit (20) nach einem der vorangegangenen Ansprüche.

8. Fahrzeug (10) nach Anspruch 7,
**dadurch gekennzeichnet, dass**
die mindestens eine Rolleneinheit (20) derart an dem Fahrzeugrahmen (12) angeordnet ist, dass
die Schwenkachse (61) in eine Vertikalrichtung (Z) verläuft, und dass
die Drehachse (51) rechtwinklig zu der Vertikalrichtung (Z) verläuft.

9. Fahrzeug (10) nach einem der Ansprüche 7 bis 8,
**dadurch gekennzeichnet, dass**
das Fahrzeug (10) eine Auswerteeinheit (50) aufweist, welche
eine von dem ersten Drehgeber erfasste Drehzahl des Rades (30) und/oder
einen von dem ersten Drehgeber erfassten Drehwinkel des Rades (30), sowie
einen von dem zweiten Drehgeber erfassten Schwenkwinkel des Haltekörpers (24) auswertet.

10. Fahrzeug (10) nach Anspruch 9,
**dadurch gekennzeichnet, dass**
die Auswerteeinheit (50) dazu eingerichtet ist, aus
einer von dem ersten Drehgeber erfassten Drehzahl des Rades (30) und/oder
einem von dem ersten Drehgeber erfassten Drehwinkel des Rades (30), sowie
einem von dem zweiten Drehgeber erfassten Schwenkwinkel des Haltekörpers (24)
eine aktuelle Position des Fahrzeugs (10), insbesondere relativ zu einer vorherigen Position des Fahrzeugs (10) zu bestimmen.

## Claims

1. A roller unit (20) for a vehicle (10), in particular for an autonomously driving vehicle (10), comprising
a holding body (24),
at least one wheel (30) rotatable relative to the holding body (24) about an axis of rotation (51), and
a mounting body (22), wherein the holding body (24) is pivotable relative to the mounting body (22) about a pivot axis (61),
wherein
the roller unit (20)
has a first rotary transducer for detecting a speed of rotation and/or an angle of rotation of the wheel (30) relative to the holding body (24), and
a second rotary transducer for detecting a pivot angle of the holding body (24) relative to the mounting body (22),
**characterised in that**
the first rotary transducer is attached in a first sensor unit (31), and **in that**
the roller unit (20) has a first gear unit (41) which transmits a rotation of the wheel (30) to the first sensor unit (31), and **in that**
the first rotary transducer detects a speed of rotation and/or an angle of rotation of the wheel (30) indirectly by way of the first gear unit (41).

2. A roller unit (20) according to claim 1,
**characterised in that**
the first sensor unit (31) is attached to the mounting body (22).

3. A roller unit (20) according to one of the preceding claims,
**characterised in that**
the second rotary transducer is attached to the mounting body (22), and **in that**
the second rotary transducer directly detects a pivot angle of the holding body (24).

4. A roller unit (20) according to one of claims 1 to 2,
**characterised in that**
the second rotary transducer is attached in a second sensor unit (32), and **in that**
the roller unit (20) has a second gear unit (42) which transmits a pivoting of the holding body (24) to the second sensor unit (32), and **in that**
the second rotary transducer detects a pivot angle of the holding body (24) indirectly by way of the second gear unit (42).

5. A roller unit (20) according to claim 4,
**characterised in that**
the second sensor unit (32) is attached to the mounting body (22).

6. A roller unit (20) according to one of the preceding claims,
**characterised in that**
the roller unit (20) has a spring unit (26) which
presses the holding body (24) away from the mounting body (22) along the pivot axis (61).

7. A vehicle (10), in particular autonomously driving vehicle, comprising
a vehicle frame (12) and
at least one roller unit (20) according to one of the preceding claims.

8. A vehicle (10) according to claim 7,
**characterised in that**
the at least one roller unit (20) is arranged on the vehicle frame (12) in such a way that the pivot axis (61) runs in a vertical direction (Z), and that
the axis of rotation (51) runs at right-angles to the vertical direction (Z).

9. A vehicle (10) according to one of claims 7 to 8,
**characterised in that**
the vehicle (10) has an evaluation unit (50) which evaluates
a speed of rotation of the wheel (30) detected by the first rotary transducer and/or
an angle of rotation of the wheel (30) detected by the first rotary transducer, and also
a pivot angle of the holding body (24) detected by the second rotary transducer.

10. A vehicle (10) according to claim 9,
**characterised in that**
the evaluation unit (50) is configured to determine, from
a speed of rotation of the wheel (30) detected by the first rotary transducer and/or
an angle of rotation of the wheel (30) detected by the first rotary transducer, and also a pivot angle of the holding body (24) detected by the second rotary transducer,
a current position of the vehicle (10), in particular relative to a previous position of the vehicle (10).

## Revendications

1. Unité de roulettes (20) pour un véhicule (10), en particulier pour un véhicule à conduite autonome (10), comprenant un corps de maintien (24), au moins une roue (30) pivotante autour d'un axe de rotation (51) relativement au corps de maintien (24) et un corps de montage (22), le corps de maintien (24) étant pivotant relativement au corps de montage (22) autour d'un axe de pivotement (61), dans laquelle l'unité de roulettes (20) comprend un premier codeur rotatif pour détecter une vitesse de rotation et/ou un angle de rotation de la roue (30) relativement au corps de maintien (24) et comprend un second codeur rotatif pour détecter un angle de pivotement du corps de maintien (24) relativement au corps de montage (22) **caractérisée en ce que** le premier codeur rotatif est disposé dans une première unité de capteur (31), et **en ce que** l'unité de roulettes (20) comprend un premier engrenage (41) qui transmet une rotation de la roue (30) à la première unité de capteur (31), et **en ce que** le premier codeur rotatif détecte une vitesse de rotation et/ou un angle de rotation de la roue (30) indirectement via le premier engrenage (41).

2. Unité de roulettes (20) selon la revendication 1, **caractérisée en ce que** la première unité de capteur (31) est disposée sur le corps de montage (22).

3. Unité de roulettes (20) selon l'une des revendications précédentes, **caractérisée en ce que** le second codeur rotatif est disposé sur le corps de montage (22), et **en ce que** le second codeur rotatif détecte directement un angle de pivotement du corps de maintien (24).

4. Unité de roulettes (20) selon l'une des revendications 1 à 2, **caractérisée en ce que** le second codeur rotatif est disposé dans une seconde unité de capteur (32), et **en ce que** l'unité de roulettes (20) comprend un second engrenage (42) qui transmet un pivotement du corps de maintien (24) à la seconde unité de capteur (32), et **en ce que** le second codeur rotatif détecte un angle de pivotement du corps de maintien (24) indirectement via le second engrenage (42).

5. Unité de roulettes (20) selon la revendication 4, **caractérisée en ce que** la seconde unité de capteur (32) est disposée sur le corps de montage (22).

6. Unité de roulettes (20) selon l'une des revendications précédentes, **caractérisée en ce que** l'unité de roulettes (20) comprenant une unité de ressort (26) qui repousse le corps de maintien (24) le long de l'axe de pivotement (61) à partir du corps de montage (22).

7. Véhicule (10), en particulier véhicule à conduite autonome, comprenant un châssis de véhicule (12) et au moins une unité de roulettes (20) selon l'une des revendications précédentes.

8. Véhicule (10) selon la revendication 7, **caractérisé en ce que** au moins une unité de roulettes (20) est disposée sur le châssis de véhicule (12) de sorte que-l'axe de pivotement (61) s'étend dans une direction verticale (Z), et que l'axe de rotation (51) s'étend perpendiculaire à la direction verticale (Z).

9. Véhicule (10) selon l'une des revendications 7 à 8, caractérisé en ce que-le véhicule (10) comprend une unité d'évaluation (50) qui évalue une vitesse de rotation de la roue (30) détectée par le premier codeur rotatif et/ou un angle de rotation de la roue (30) détecté par le premier codeur rotatif, ainsi qu'un angle de pivotement du corps de maintien (24) détecté par le second codeur rotatif.

10. Véhicule (10) selon la revendication 9, **caractérisé en ce que** l'unité d'évaluation (50) est conçue pour déterminer, à partir d'une vitesse de rotation de la roue (30) détectée par le premier codeur rotatif et/ou d'un angle de rotation de la roue (30) détecté par le premier codeur rotatif, ainsi que d'un angle de pivotement du corps de maintien (24) détecté par le second codeur rotatif, une position actuelle du véhicule (10), en particulier relativement à une position précédente du véhicule (10).
